(19) Europäisches Patentamt
European Patent Office
Office européen des brevets

(11) Veröffentlichungsnummer: **0 212 086**
**B1**

(12) # EUROPÄISCHE PATENTSCHRIFT

(45) Veröffentlichungstag der Patentschrift: **05.12.90**

(51) Int. Cl.⁵: **C01G 23/00,** H01M 4/00

(21) Anmeldenummer: **86107159.5**

(22) Anmeldetag: **27.05.86**

(54) **Verfahren zur Aufbereitung von Titandisulfid für den Einsatz in Batterien.**

(30) Priorität: **17.07.85 DE 3525475**

(43) Veröffentlichungstag der Anmeldung:
**04.03.87 Patentblatt 87/10**

(45) Bekanntmachung des Hinweises auf die Patenterteilung:
**05.12.90 Patentblatt 90/49**

(84) Benannte Vertragsstaaten:
**AT BE CH DE FR GB IT LI NL SE**

(56) Entgegenhaltungen:
**EP-A- 0 028 691**
**US-A- 4 307 157**

(73) Patentinhaber: **Degussa Aktiengesellschaft,**
**Weissfrauenstrasse 9, D-6000 Frankfurt am Main 1(DE)**

(72) Erfinder: **Panster, Peter, Dr., Im Lochseif 8,**
**D-6458 Rodenbach(DE)**
Erfinder: **Müller, Rudolf, Philipp-Reiss-Strasse 1,**
**D-6463 Freigericht 1(DE)**
Erfinder: **Kleinschmit, Peter, Dr., Wildaustrasse 19,**
**D-6450 Hanau 9(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 212 086 B1

## Beschreibung

Gegenstand der Erfindung ist ein Verfahren, nach dem Titandisulfid-Rohmaterial unterschiedlicher Provenienz in der Weise aufbereitet werden kann, daß es die beim Einsatz als Kathodenmaterial in Alkalimetall/$TiS_2$-, insbesondere Li/$TiS_2$-Batterien gestellten physikalischen und chemischen Kriterien ideal erfüllt.

Schon seit einigen Jahren finden wiederaufladbare Batterien mit einer Anode aus elementarem Alkalimetall, bevorzugt wird insbesondere Lithium, und einer Kathode aus Titandisulfid das Interesse der Batterieforschung. Die Vorzüge dieses Systems, das auf der Reaktion

$$Li + TiS_2 \rightleftharpoons LiTiS_2 \quad (1)$$

basiert, liegen u. a. in der Reversibilität über viele Jahre, in der hohen Energiedichte, in der hohen freien Bildungsenergie, in der Einsetzbarkeit bei Raumtemperatur und in der Tatsache, daß im Elektrodensystem keine strukturellen Änderungen stattfinden.

Mögliche Anwendungen und Anwendungsformen für diesen Batterietyp sind z. B. Knopfzellen für die Mikroelektronik-Industrie, die auch durch Solarenergie wieder aufgeladen werden können, aber auch Großbatterien für Elektroautos und Notstromeinrichtungen (vgl. z. B. DE-OS 24 42 411; DE-OS 28 17 702; DE-OS 28 17 708; US-PS 4 091 191; M.S. Whittingham in Science Vol. 192, Seite 1126; M.S.Whittingham in Prog. Solid St. Chem. Vol. 12, Seite 41).

Der bei der Entladung der Li/$TiS_2$-Batterie ablaufende energieliefernde Vorgang kann so beschrieben werden, daß $Li^+$-Ionen aus der Li-Anode in das hexagonale Schichtengitter von Titandisulfid unter Ausbildung von $LiTiS_2$, einer sogenannten Intercalationsverbindung eingelagert werden. Bei der Wiederaufladung der Batterie findet eine Umkehrung dieses Vorganges statt. Zur Gewährleistung einer möglichst hohen Zahl an Entladungs-/Ladungszyklen unter Erzielung einer möglichst konstanten, hohen Leistung des Li/$TiS_2$-Batteriesystems müssen bezüglich des als Kathodenmaterial verwendeten Titandisulfids bestimmte chemische und physikalische Kriterien erfüllt sein. Diese werden von G.F. Everson in dem Buch "Speciality Inorganic Chemicals", herausgegeben von R. Thompson (Special Publication No. 40 The Royal Society of Chemistry, Burlington House, London) Seiten 235 - 236 ausführlich beschrieben.

Danach soll Tiandisulfid, das als Kathodenmaterial in Batterien eingesetzt wird, unter anderem folgende physikalischen und chemischen Spezifikationen besitzen:

1. Die Teilchengröße soll ziemlich klein sein. Anzustreben ist z. B. eine Korngrößenverteilung von 1 - 25, besser 10 µm, wobei eine geringe Teilchengröße eine bessere Kontrolle über die Porosität der hergestellten Elektrode ermöglicht.
2. Die Teilchenkristalle sollen ein möglichst kleines Verhältnis der Längen von Grundflächenachse zu vertikaler Achse aufweisen, damit die Diffusion der Lithiumatome, die parallel zur Grundebene erfolgt, begünstigt wird. Dies äußert sich dann in höheren Ladungs-/Entladungsgeschwindigkeiten.
3. Der Chlorgehalt des Titandisulfids soll möglichst niedrig sein, da Chlor mit der Alkalimetall-Anode reagiert, was zu einer herabgesetzten Reversibilität des Systems führt.
4. Der freie Schwefelgehalt des Titandisulfids soll möglichst niedrig sein, da Schwefel ebenfalls mit der Alkalimetall-Anode reagiert und außerdem die erzielbare Energiedichte der Batterie mindert.
5. Die chemische Zusammensetzung des Titandisulfids soll der Formel $Ti_xS_2$ entsprechen, wobei x im Idealfall gleich 1 oder höchstens maximal 1,05 ist.
6. Der sogenannte Seebeck-Koeffizient des Titandisulfids soll im Bereich von 130 - 150 µV/K liegen. Hierbei handelt es sich um die zwischen zwei, eine Temperaturdifferenz von 10 - 15° C aufweisenden Kupferblöcken, zwischen die ein $TiS_2$-Preßling eingespannt ist, gemessene Thermospannung.

Die Herstellung von Titandisulfid ist nach einer Reihe von Verfahren möglich. Einerseits kann es aus den Elementen Titan und Schwefel (vgl. z. B. US-PS 3 079 229, DE-OS 26 52 908) oder andererseits aus einer Titanverbindung und einer Schwefelungskomponente synthetisiert werden (vgl. z. B. DE-OS 12 24 288, GB-PS 878 101, DE-PS 26 52 092, US-PS 4 137 297, US-PS 3 979 500, DE-OS 29 45 306).

Als im Produktionsmaßstab realisierbar erweist sich unter den Gesichtspunkten von technischer Durchführbarkeit und Wirtschaftlichkeit jedoch lediglich ein prinzipielles Verfahrenskonzept, gemäß dem Titantetrachlorid mit Schwefelwasserstoff bei Temperaturen von 400 - 700° gemäß der Gleichung

$$TiCl_4 + 2\,H_2S \rightarrow TiS_2 + 4\,HCl \quad (2)$$

zur Umsetzung gebracht wird. Bei dieser Reaktion kann das Titandisulfid entweder in der Gasphase (vgl. z. B. US-PS 4 137 297), an bereits vorhandenem $TiS_2$ (vgl. DE-OS 12 24 288) oder aber an der heißen Reaktorwand (vgl. DE-OS 29 45 306) gebildet werden.

Dabei ist ein Zutritt von Luft wegen der bei den hohen Umsetzungstemperaturen zu erwartenden Bildung von oxidischen Titanverbindungen in jedem Fall zu vermeiden.

Nach Varianten der obengenannten Umsetzung von Titantetramit Schwefelwasserstoff kann zwar Titandisulfid erhalten werden, das sich prinzipiell zur Herstellung von Kathoden in Li/$TiS_2$-Batterien eignet. In bezug auf die vorstehend genannten Kriterien, die bei idealem $TiS_2$-Kathodenmaterial erfüllt sein sollen, ist dieses Produkt aber in verschiedener Hinsicht noch verbesserungsbedürftig.

So entspricht z. B. das gemäß US-PS 4 137 297 erhaltene Titandisulfid in bezug auf seine chemische Zusammensetzung der idealen Formel $TiS_2$ und seine Teilchengröße liegt in dem in etwa gewünschten Bereich von 1 - 25 µm, die Verunreinigung mit freiem Schwefel ist mit 0,54 Gew.% jedoch

eindeutig zu hoch und der Gehalt an Chlor sollte ebenfalls niedriger als die angegebenen o,8 Gew.% sein.

Analoges gilt im Prinzip auch für das nach der DE-OS 29 45 306 erhaltene Titandisulfid, bei dem die chemische Zusammensetzung ebenfalls ideal, der Chlorgehalt sehr niedrig, der Schwefelgehalt mit 0,2 Gew.% aber noch zu hoch und der Teilchendurchmesser zu groß ist.

Als entscheidende Probleme erweisen sich also bei den nach beiden vorstehend genannten Verfahren erhaltenen Titandisulfiden einerseits der zu hohe Gehalt an freiem Schwefel und andererseits die ungünstige Teilchengrößenverteilung. Für beide Probleme gab es bisher keine oder zumindest technisch nicht einfach zu realisierende Lösungen. Nach Angaben in dem bereits zitierten Buch "Speciality Inorganic Chemicals" auf Seite 235 verhindern die Schmiermitteleigenschaften von Titandisulfid aufgrund von dessen Schichtstruktur eine effiziente Mahlung zur Einstellung der Korngröße. Nach bisheriger Ansicht von Batterie-Experten soll dabei auch die Kristallstruktur von $TiS_2$ teilweise zerstört werden. Daher wurde die Korngrößenverteilung von rohem Titandisulfid bisher als im wesentlichen unveränderbare Größe angesehen. Überdies wäre eine Mahlung von Titandisulfid mit üblichen Mitteln technisch kaum realisierbar. Sie müßte wegen der extremen Bereitschaft von feinteiligem $TiS_2$, mit Luftsauerstoff bzw. Luftfeuchtigkeit zu reagieren, den unerwünschten Schwefel bzw. Schwefelwasserstoff freizusetzen und wegen gegebener Staubexplosionsgefahr sowie Neigung zur Selbstentzündlichkeit jedenfalls unter Schutzgas durchgeführt werden.

Auch ein bisher entwickeltes Reinigungsverfahren (US-PS 4 307 l57), das eine Behandlung des rohen Titandisulfids mit Oxidationsmitteln vorsieht, ist technisch schwer praktikabel, weil sehr aufwendig.

Ziel der Erfindung ist daher, ein technisch einfach und auch kostengünstig zu realisierendes Verfahren zu entwickeln, nach dem Titandisulfid-Rohmaterial - möglichst in einer einzigen Stufe - so aufbereitet werden kann, daß es die eingangs aufgelisteten Spezifikationen für den Einsatz als Elektrodenmaterial in Batterien erfüllt. Insbesondere sollten mit Hilfe dieses Verfahrens die beiden Hauptprobleme, nämlich der zu hohe Schwefelgehalt und das zu grobe Korn, vermieden werden.

Diese Aufgabe wird gemäß der Erfindung dadurch gelöst, daß das aufzubereitende Titandisulfid mit einer der Stöchiometrie von $TiS_2$ entsprechenden oder nahekommenden Zusammensetzung, einem Gehalt an freiem Schwefel von größer 0,l Gew.% und/oder einem Teilchendurchmesser $d_{90\ \%}$ größer als l0 µm in einer leicht verflüchtigbaren, gegenüber $TiS_2$ inerten und Schwefel, nicht aber $TiS_2$ lösenden bzw. anlösenden organischen Flüssigkeit mit einer Dispergiermaschine des Rotor-Stator-Systems dispergiert, anschließend von der organischen Flüssigkeit abgetrennt, die Dispergierbehandlung gegebenenfalls in frischer organischer Flüssigkeit wiederholt, das abgetrennte Titandisulfid mit organischer Flüssigkeit der angegebenen Eigenschaften gewaschen und anschliessend bei einer Temperatur im Bereich von Raumtemperatur bis l50° C unter Schutzgasatmosphäre bei oder unterhalb Atmosphärendruck oder nur im Vakuum getrocknet wird.

Entgegen bisheriger Ansichten über die Ergebnisse von Dispergierbemühungen zeigte sich, daß das nach dem erfindungsgemäßen Verfahren erhältliche Produkt nicht nur die gewünschte Reinheit in bezug auf den Schwefel- und Chlorgehalt und die gewünschte Korngröße besitzt, sondern daß auch die elektrischen Eigenschaften und die Kristallstruktur nicht geschädigt sind. Das erfindungsgemäß aufbereitete Titandisulfid erfüllt also in jeder Hinsicht die eingangs aufgeführten Anforderungen für Elektrodenmaterial von Alkalimetall/$TiS_2$-Batterien.

Weiterhin resultiert aus der erfindungsgemäßen Behandlung eine zusätzliche besondere Produkteigenschaft, nämlich eine wesentlich erhöhte Schütt- bzw. Rütteldichte von deutlich über 0,6 g/cm³, gegenüber 0,07 - 0,4 g/cm³ beim Rohmaterial, welche die bei der Elektrodenformung erforderliche Kompaktierung deutlich erleichtert.

Ein weiterer Vorteil der Behandlung ist auch eine Herabsetzung des Chlorgehaltes, die allerdings nicht so beträchtlich ist wie die Verminderung des freien Schwefelgehaltes.

Mit einem zum Vergleich entwickelten anderen Verfahren, das eine Behandlung von $TiS_2$-Rohmaterial mit Ultraschall in einem Lösungsmittel vorsieht, konnten keine vergleichbaren Produktqualitäten erzielt werden.

Der Index $d_{90\ \%}$ für den Teilchendurchmesser des Ausgangsmaterials bedeutet den maximalen Durchmesser von 90 % aller vorhandenen Teilchen. Dieser Wert kann leicht an einer Kurve, die die Teilchengrößenverteilung prozentual wiedergibt, abgelesen werden. Die Teilchengrößenverteilung kann z. B. mit dem sogenannten Coulter Counter-Meßgerät oder mit der Sedimentationswaage bestimmt werden.

Geeignete organische Medien, in denen die Dispergierbehand lung gemäß Erfindung durchgeführt werden kann, stellen grundsätzlich alle bei üblichen Trocknungsbedingungen leicht verflüchtigbaren organischen Flüssigkeiten dar, die nicht mit Titandisulfid reagieren oder dieses lösen bzw. anlösen und in denen Schwefel wenigstens in geringem Umfang löslich ist.

So ist z. B. Schwefelkohlenstoff aufgrund seines hohen Schwefel-Lösungsvermögens prinzipiell für diese Behandlung geeignet, wegen seiner leichten Brennbarkeit ist jedoch der technische Einsatz mit großem Aufwand verbunden. Unter den Gesichtspunkten der Sicherheit, der leichten Abtrennbarkeit bei der Trocknung und eines günstigen Dispergierverhaltens von $TiS_2$ im flüssigen Medium haben sich besonders chlorierte und/oder fluorierte Kohlenwasserstoffe oder Kohlenwasserstoffgemische mit einem Siedepunkt bei Normaldruck zwischen 20 und l50° C als geeignet erwiesen. Derartige organische Flüssigkeiten sind Lösungsmittel, wie Methylenchlorid, Chloroform, Tetrachlorkohlenstoff, l,2-

Dichlorethan, l,2-Dichlorethylen, die isomeren Verbindungen von Trichlorethan oder Tetrachlorethan, Trichlorethylen, Tetrachlorethylen, Trichlorfluormethan, Trichlortrifluorethan sowie Mischungen davon. Unter dem Gesichtspunkt der Toxizität kann hierunter natürlich eine weitere Auswahl vorgenommen werden. Besonders bevorzugt ist unter den Aspekten der Flüchtigkeit, der Brennbarkeit, der Toxizität und der Verfügbarkeit das Methylenchlorid.

Der Begriff "Dispergiermaschine des Rotor-Stator-Systems" bezieht sich auf alle Mahlsysteme, die in der flüssigen Phase eingesetzt werden und aus mindestens einem mit einer Geschwindigkeit von über l.000 Umdrehungen pro Minute sich drehenden Rotor und mindestens einem feststehenden Teil, dem sogenannten Stator, bestehen (vgl. hierzu W.Wiedmann und H. Blenke in "Chemie-Anlagen + Verfahren", Heft 4, l976, Seiten 82 - 86, 89, 90, ll0).

Die unterschiedlichen Formen des Einsatzes der erfindungsgemäß zu verwendenden Dispergiermaschine, z. B. in einem Behälter oder in einer Rohrleitung, sind Stand der Technik und können auch in diesem Fall praktiziert werden.

Die Anwendung von bestimmten Temperatur- und/oder Druckwerten ist bei dem erfindungsgemäßen Verfahren zur Dispergierbehandlung von $TiS_2$ nicht kritisch. Es kann bei einer Temperatur unterhalb, bei oder oberhalb Raumtemperatur, bei Normaldruck oder einem Überdruck, welcher der Summe der Partialdrucke der flüchtigen Komponenten der Suspension entspricht, dispergiert werden. Im Verlauf einer bei Raumtemperatur beginnenden Behandlung der $TiS_2$-Suspension mit der Dispergiermaschine kann eine deutliche Temperaturerhöhung auftreten.

Die erforderliche Dauer der Behandlung des Titandisulfids hängt überwiegend von dessen Ausgangs-Teilchengröße, von der Leistungsfähigkeit der verwendeten Dispergiermaschine, (z. B. einstufig oder mehrstufig, Rotor-Stator-Durchmesser, Umdrehungsgeschwindigkeit), von den Konzentrationsverhältnissen und von der benutzten Gesamtmenge ab. Bei Verwendung eines Labordispergators (z. B. sogenannter Ultra-Turrax der Firma Janke & Kunkel), BRD) mit einem Rotor-Stator-Durchmesser von ca. 4 cm und einer Umdrehungsgeschwindigkeit des Rotors von l0.000 Umdrehungen pro Minute genügt z. B. eine 20 minütige Behandlung einer Menge von ca. 8 l einer Suspension von l,5 kg $TiS_2$ in einem der genannten flüssigen Medien, um aus Titandisulfid mit einer Ausgangskorngröße von einigen mm und mit einem erhöhten Wert an freiem Schwefel elektrodengerechtes Material herzustellen. Die Dispergierbehandlung des Titandisulfids kann natürlich in frischer organischer Flüssigkeit wiederholt werden. Hierzu wird am besten das bei der ersten Dispergierung verwendete Lösungsmittel abgetrennt und der noch feuchte Feststoff sofort anschließend wieder in frischem Lösungsmittel gleicher oder verschiedener chemischer Zusammensetzung, jedoch mit den erforderlichen Eigenschaften, aufgeschlämmt und erneut behandelt. Zur Dispergierung können einzelne Lösungsmittel oder auch Lösungsmittelgemische, sofern sie die erforderlichen Eigenschaften haben, eingesetzt werden.

Die Abtrennung des behandelten Feststoffs von der flüssigen Phase erfolgt nach gängigen Techniken, wie Filtrieren und/oder Dekantieren bzw. Abzentrifugieren.

Die angegebene Obergrenze für die Trocknungstemperatur von l50° C kann unter bestimmten Voraussetzungen noch weiter nach oben verschoben werden, z. B. auch auf 200° C, denn Titandisulfid zersetzt sich beispielsweise bei nahezu vollständiger Abwesenheit von Luftsauerstoff auch bei dieser höheren Temperatur nicht wesentlich, wenn nur kurzzeitig getrocknet wird. Bei längerer Temperatureinwirkung kann jedoch auch bei vollständiger Abwesenheit von Luft eine Freisetzung von freiem Schwefel erfolgen, so daß ein vorgegebener Grenzwert von 0,l Gew.% freier Schwefel überschritten werden würde. Eine weitere Handhabung des behandelten Titandisulfids darf ohnehin nur unter Schutzgasatmosphäre erfolgen.

Ein weiterer Gegenstand der Erfindung ist die Verwendung des nach dem erfindungsgemäßen Verfahren aufbereiteten Titandisulfids als Kathodenmaterial in Batterien, welche eine Anode aus elementarem Alkalimetall, insbesondere aus Lithium, enthalten.

Die Erfindung wird nachstehend anhand von zwei Ausführungsbeispielen näher erläutert.

Beispiel I

Behandelt wurde ein Titandisulfid-Rohmaterial mit folgenden Spezifikationen:

Ti-Gehalt: 42,80 Gew.%
Sulfid-Gehalt: 56,30 Gew.%
Freier Schwefel-Gehalt: 0,65 Gew.%
Chlor-Gehalt: 0,58 Gew.%
Korngrößenverteilung:
(Coulter Counter) $d_{90}$% größer als 10 µm
Seebeck-Koeffizient: 137 µV/K
Spezifische Oberfläche (BET): 3,7 $m^2$/g
Schüttdichte: 350 g/l

l.500 g dieses Titandisulfids wurden unter Schutzgasatmosphäre in 6,0 l Methylenchlorid suspendiert. Bei Raumtemperatur wurde diese Suspension 30 Minuten lang mit einer Dispergiermaschine (sogenannte ULTRA TURRAX R Maschine Typ T 45, 600 Watt der Firma Janke & Kunkel GmbH, IKA-Werk, 78l3 Staufen, BRD) mit einem Rotor-Stator-Durchmesser von rund 4 cm und bei einer Umdrehungsgeschwindigkeit des Rotors von l0.000 U/min. behandelt. Anschließend wurde der Feststoff über ein l0 l Druckfilter unter $N_2$-Atmosphäre abfiltriert, erneut in 6 l Methylenchlorid eingeschlämmt und 30 Minuten lang mit der Dispergiermaschine behandelt. Nach erneuter Abfiltration, Waschung mit l l $CH_2Cl_2$ und 8-stündiger Trocknung bei 70° C unter $N_2$-Atmosphäre wurde ein batteriegerechtes Titandisulfid mit folgenden Spezifikationen erhalten:

Ti-Gehalt: 42,79 Gew.%
Sulfid-Gehalt: 56,38 Gew.%
Freier Schwefel-Gehalt: <0,1 Gew.%

Chlor-Gehalt: 0,49 Gew.%
Korngrößenverteilung:
(Coulter Counter) $d_{90}$% kleiner als 10 µm und größer als 2 µm
Seebeck-Koeffizient: 137 µV/K
Spezifische Oberfläche (BET): 3,7 $m^2/g$
Schüttdichte: 650 g/l

Beispiel 2

Behandelt wurde ein Titandisulfid-Rohmaterial mit folgenden Spezifikationen:
Ti-Gehalt: 42,78 Gew.%
Sulfid-Gehalt: 56,2l Gew.%
Freier Schwefel-Gehalt: 0,30 Gew.%
Chlor-Gehalt: 0,62 Gew.
Korngrößenverteilung
(Coulter Counter): $d_{90}$% größer als l0 µm
Seebeck-Koeffizient: l45 µV/K
Spezifische Oberfläche (BET): 4,2 $m^2/g$
Schüttdichte: 340 g/l

l,5 kg dieses Rohmaterials wurden einmal unter Schutzgasatmosphäre 45 Minuten lang in 6,0 l l l.l.-Trichlorethan analog zu Beispiel l behandelt. Nach l2-stündiger Trocknung bei l00° C wurde ein Produkt mit folgenden Spezifikationen erhalten:
Ti-Gehalt: 42,79 Gew.%
Sulfid-Gehalt: 56,30 Gew.%
Freier Schwefel-Gehalt: 0,08 Gew.%
Chlor-Gehalt: 0,57 Gew.%
Korngrößenverteilung
(Coulter Counter): $d_{90}$ % kleiner als l0 µm und größer als 3 µm
Seebeck-Koeffizient: l46 µV/K
Spezifische Oberfläche (BET): 4,2 $m^2/g$
Schüttdichte: 632 g/l

**Patentansprüche**

l. Verfahren zur Aufbereitung von Titandisulfid für den Einsatz als Elektrodenmaterial in Batterien, dadurch gekennzeichnet, daß das aufzubereitende Titandisulfid mit einer der Stöchiometrie von $TiS_2$ entsprechenden oder nahekommenden Zusammensetzung, einem Gehalt an freiem Schwefel von größer 0,l Gew.% und/oder einem Teilchendurchmesser $d_{90}$ % größer als l0 µm in einer leicht verflüchtigbaren, gegenüber $TiS_2$ inerten und Schwefel, nicht aber $TiS_2$ lösenden bzw. anlösenden organischen Flüssigkeit mit einer Dispergiermaschine des Rotor-Stator-Systems dispergiert, anschließend von der organischen Flüssigkeit abgetrennt, die Dispergierbehandlung gegebenenfalls in frischer organischer Flüssigkeit wiederholt, das abgetrennte Titandisulfid mit organischer Flüssigkeit der angegebenen Eigenschaften gewaschen und anschließend bei einer Temperatur im Bereich von Raumtemperatur bis l50° C unter Schutzgasatmosphäre bei oder unterhalb Atmosphärendruck oder nur im Vakuum getrocknet wird.

2. Verfahren nach Anspruch l, dadurch gekennzeichnet, daß die Dispergierung in einem chlorierten und/oder fluorierten Kohlenwasserstoff mit einem Siedepunkt bei Normaldruck von 20° - l50° C durchgeführt wird.

3. Verfahren nach Anspruch l oder 2, dadurch gekennzeichnet, daß die Dispergierung in Methylenchlorid durchgeführt wird.

4. Verwendung des nach vorstehenden Ansprüchen erhaltenen Titandisulfids als Kathodenmaterial für Batterien, welche eine Anode aus elementarem Alkalimetall, insbesondere Lithium, enthalten.

**Claims**

1. A process for the preparation of titanium disulfide for use as an electrode material in batteries, characterized in that the titanium disulfide to be prepared, which has a composition corresponding to or coming close to the stoichiometry of $TiS_2$, a content of free sulfur of greater than 0.1% by weight and/or a particle diameter $d_{90}$ % of larger than 10 µm, is dispersed in a readily volatile organic liquid, which is inert to $TiS_2$ and which dissolves or partly dissolves sulfur, but not $TiS_2$, using a dispersion machine of the rotor-stator type and is then separated off from the organic liquid, the dispersion treatment is optionally repeated in fresh organic liquid, the titanium disulfide separated off is washed with organic liquid having the described properties and subsequently dried at a temperature in the range from room temperature to 150°C in an inert gas atmosphere at or below atmospheric pressure or only in vacuo.

2. A process as claimed in claim 1, characterized in that the dispersion medium is a chlorinated and/or fluorinated hydrocarbon having a boiling point under normal pressure of 20 to 150°C.

3. A process as claimed in 1 or 2, characterized in that the dispersion medium is methylene chloride.

4. The use of titanium disulfide obtained by the process claimed in the preceding claims as a cathode material for batteries comprising an anode of elemental alkali metal, particularly lithium.

**Revendications**

1. Procédé de préparation de disulfure de titane pour la mise en œuvre comme matériau d'électrodes dans des batteries, caractérisé en ce que le disulfure de titane qui doit être préparé d'une composition qui correspond à la stoechiométrie de $TiS_2$ ou approchant, d'une teneur en soufre libre de plus de 0,1% en poids et/ou d'un diamètre de particules ($d_{90}$%) plus grand que 10 µm, est mis en dispersion dans un fluide organique dissolvant ou dissolvant partiellement le soufre mais non pas $S_2Ti$, inerte vis-à-vis de $TiS_2$, facilement volatilisable, au moyen d'une machine de dispersion du système rotor/stator, puis est séparé du liquide organique, répète le traitement de dispersion le cas échéant avec un fluide organique frais, le disulfure de titane séparé avec le fluide organique ayant les propriétés mentionnées est lavé et ensuite séché à une température dans la zone allant de la température ordinaire à 150°C sous atmosphère de gaz protecteur à la pression atmosphérique ou en dessous, ou seulement sous vide.

2. Procédé selon la revendication 1, caractérisé en ce que la dispersion est effectuée dans un hydrocarbure chloré et/ou fluoré ayant un point d'ébullition à pression ordinaire de 20 à 150°C.

3. Procédé selon les revendications 1 ou 2, caractérisé en ce que la dispersion est effectuée dans le chlorure de méthylène.

4. Utilisation du disulfure de titane obtenu selon les revendications précédentes, comme matériau de cathode pour des batteries qui contiennent une anode à base de métal alcalin élémentaire, en particulier du lithium.